# EUROPÄISCHE PATENTSCHRIFT

(11) **EP 0 732 828 B1**
(45) Veröffentlichungstag und Bekanntmachung des Hinweises auf die Patenterteilung: **27.02.2008**
(21) Anmeldenummer: 96103192.9
(22) Anmeldetag: 01.03.1996
(51) Int. Cl.: H04L 1/22, H04Q 11/04

(54) **Redundanzoptimiertes Kommunikationsnetz für die Übertragung von Nachrichtensignalen**
Redundancy optimised communication network for transmission of data signals
Réseau de communication optimisé en redondance pour la transmission de signaux de données

(30) Priorität: 16.03.1995 DE 19509602; 27.03.1995 DE 19511250
(43) Veröffentlichungstag der Anmeldung: 18.09.1996
(73) Patentinhaber: Nokia Siemens Networks GmbH & Co. KG, 81541 München (DE)
(72) Erfinder: Stein, Karl-Ulrich, Dr.-Ing., 82008 Unterhaching (DE)

(56) Entgegenhaltungen:
- US-A- 5 398 236
- WU T -H: "EMERGING TECHNOLOGIES FOR FIBER NETWORK SURVIVABILITY," IEEE COMMUNICATIONS MAGAZINE,US,IEEE SERVICE CENTER. PISCATAWAY, N.J, Bd. 33, Nr. 2, 1. Februar 1995 (1995-02-01), Seiten 58-59,62-74, XP000505673 ISSN: 0163-6804
- HIDEO TATSUNO ET AL: "HITLESS PATH PROTECTION SWITCHING TECHNIQUES FOR ATM NETWORKS" ELECTRONICS & COMMUNICATIONS IN JAPAN, PART I - COMMUNICATIONS,US,SCRIPTA TECHNICA. NEW YORK, Bd. 77, Nr. 8, 1. August 1994 (1994-08-01), Seiten 13-23, XP000485780 ISSN: 8756-6621
- YAMANAKA H ET AL: "622 MB/S 8 X 8 SHARED MULTIBUFFER ATM SWITCH WITH HIERARCHICAL QUEUEING AND MULTICAST FUNCTIONS" PROCEEDINGS OF THE GLOBAL TELECOMMUNICATIONS CONFERENCE (GLOBECOM),US,NEW YORK, IEEE, Bd. -, 1993, Seiten 1488-1495, XP000436062

## Beschreibung

Die Erfindung bezieht sich auf ein Kommunikationsnetz gemäß dem Oberbegriff des Patentanspruchs 1.

Die Anforderungen, die heute von Betreibern und Nutzern von Netzen bezüglich Qualität und Zuverlässigkeit bei der Übertragung und Vermittlung von Informationen gestellt werden, erfordern sehr zuverlässige Netzkomponenten. Insbesondere Leitungen und Knoten einschließlich der mitimplementierten Softwarekomponenten müssen aus diesem Grund hohe Standards erfüllen und werden aus Sicherheitsgründen redundant ausgebildet.

Beim Stand der Technik werden zur Ausbildung der Redundanz in den Netzen einzelne Komponenten gedoppelt vorgesehen. Die Doppelung findet dabei auf der Ebene der Komponenten, wie beispielsweise der Leitungen, Koppelfelder und Steuerrechner, statt. Welche dieser redundant ausgebildeten Komponenten dann in die Übertragungs- und Vermittlungsfunktion miteinbezogen werden, wird von einer lokalen oder zentralen Steuerung entschieden. Der Vorteil einer derartigen Vorrichtung besteht darin, daß die einzelnen Komponenten für sich betrachtet werden können und die Steuerung des Einsatzes der Redundanz insbesondere von den Komponenten des Knotens dezentral erfolgen kann. Damit ist ein relativ einfacher Hot-Stand-By-Betrieb implementierbar.

Ein solches Netz ist im Dokument "WU T -H: EMERGING TECHNOLOGIES FOR FIBER NETWORK SURVIVABILITY," IEEE COMMUNICATIONS MAGAZINE,US,IEEE SERVICE CENTER. PISCATAWAY, N.J, Bd. 33, Nr. 2, 1. Februar 1995 (1995-02-01), Seiten 58-59,62-74,ISSN: 0163-6804" beschrieben.

Nachteilig an einer derartigen Vorrichtung ist jedoch, daß die verteilte Entscheidung über den Einsatz der Redundanz einen relativ hohen, für den Einsatz spezifischen Aufwand erfordert. Da außerdem die Software in redundant ausgebildeten Einrichtungen die gleiche ist, treten auch Softwarefehler bei beiden Einrichtungen gleichermaßen auf. Ein weiterer Nachteil dieser Strukturen besteht darin, daß keine kostengünstigen Netzknotenkomponenten eingesetzt werden können, die heutzutage in großer Zahl verfügbar sind und die keine Redundanz in ihren Komponenten selbst aufweisen. Als Beispiel hierfür seien sogenannte CPE-Komponenten (Customer Promises Equipment) genannt.

Die Aufgabe der vorliegenden Erfindung besteht darin,ein Kommunikationsnetz aufzuzeigen, in dem die oben genannten Nachteile vermieden werden können.

Vorteilhaft an der Erfindung ist, daß eine Knoten-/Maschenredundanz vorgesehen ist, die es erlaubt, schnittstellenkompatible, nicht redundant ausgebildete kostengünstige Knoten samt Software in einem Kommunikationsnetz einzusetzen. Damit wird ein hoher Zuverlässigkeitsstandard erreicht. Als Lösung wird vorgeschlagen, daß jedem Knoten ein logisch identischer Knoten als Redundanz zugeordnet wird. Weiterhin wird jede Verbindungsleitung zwischen dem Knoten durch eine redundante, gegebenenfalls über einen anderen physikalischen Pfad geführte Verbindungsleitung ergänzt, wobei die jeweilige Verbindungsleitung sowie die jeweils dazu redundante Verbindungsleitung zwischen den zwei Knoten durch Combiner-Splitter-Elemente verknüpft werden. Letztere können gegebenenfalls separat vom Knoten ausgebildet sein. Die Funktion der Knoten kann die von Multiplexern oder Crossconnectoren sein, gesteuert von einem Management- Netzwerk, sie können aber auch Vermittlungseinrichtungen ("Switches") mit call processing sein.

Weitere Ausgestaltungen der Erfindung sind in den Unteransprüchen angegeben.

Gemäß Anspruch 2 ist vorgesehen, daß die Combiner Splitter Elemente bidirektional ausgebildet sind.

Gemäß Anspruch 3 ist vorgesehen, daß die Combiner-Splitter-Elemente einen Speicher aufweisen, der derart groß dimensioniert ist, daß er die größte mögliche Laufzeitdifferenz zwischen den beiden physikalischen Pfaden einschließlich der Knoten auszugleichen gestattet. Damit ist der Vorteil verbunden, daß keine Zellen verloren gehen.

Gemäß Anspruch 4 ist vorgesehen,daß sämtliche Combiner-Splitter-Elemente in ein dem Kommunikationsnetz überlagertes, gegebenenfalls als unabhängiges System in einem Telekommunikations-Management-Netzwerk integriertes, Redundanz-Management-Netzwerk eingebunden sind.

Gemäß Anspruch 5 ist vorgesehen, daß die Combiner-Splitter-Elemente über festgelegte virtuelle Verbindungen des Kommunikationsnetzes mit einer zentralen Einrichtung des Redundanz-Management-Netzwerkes verbunden sind.

Gemäß Anspruch 6 ist vorgesehen, daß die Combiner-Splitter-Elemente jeweils über eine gesonderte physikalische Leitung mit einer zentralen Einrichtung des Redundanz-Management-Netzwerkes verbunden sind.

Gemäß Anspruch 7 ist vorgeshen, daß innerhalb des Kommunikationsnetzes Redundanz-Domänen festgelegt sind, welche jeweils durch die Combiner-Splitter-Elemente begrenzt sind.

Gemäß Anspruch 8 ist vorgesehen, daß die Combiner-Splitter-Elemente derart ausgebildet sind, daß durch diese jeweils aktiv der Redundanz-Betrieb gesteuert und lediglich bei Störungen in diesem Redundanzbetrieb der zentralen Einrichtung des Redundanz-Management-Netzwerkes ein entsprechendes Meldesignal für eine Auswertung zugeführt wird.

Gemäß Anspruch 9 ist vorgesehen, daß die Combiner-Splitter-Elemente weiter derart ausgebildet sind, daß durch diese verbindungsindividuell die Bits für die jeweilige virtuelle Verbindung erfaßt und Angaben bezüglich der jeweiligen Bitrate der zentralen Einrichtung des Redundanz-Management-Netzwerkes zugeführt sind.

Gemäß Anspruch 10 ist vorgesehen,daß die zentrale Einrichtung des Redundanz-Management-Netzwerkes derart ausgebildet ist, daß durch diese nach Maßgabe der von den Combiner-Splitter-Elementen jeweils zugeführten Meldesignale und gegebenenfalls der Bitratenangaben Protokolle bezüglich der Qualität der einzelnen virtuellen Verbindungen erstellt werden.

Im folgenden wird die vorliegende Erfindung anhand von Zeichnungen beispielsweise näher erläutert.
- FIG 1: zeigt in einem Blockschaltbild ausschnittweise ein Kommunikationsnetz, bei welchem die vorliegende Erfindung angewandt ist, und
- FIG 2: zeigt ausschnittweise einen möglichen Aufbau eines der in FIG 1 lediglich schematisch dargestellten Combiner-Splitter-Elemente.

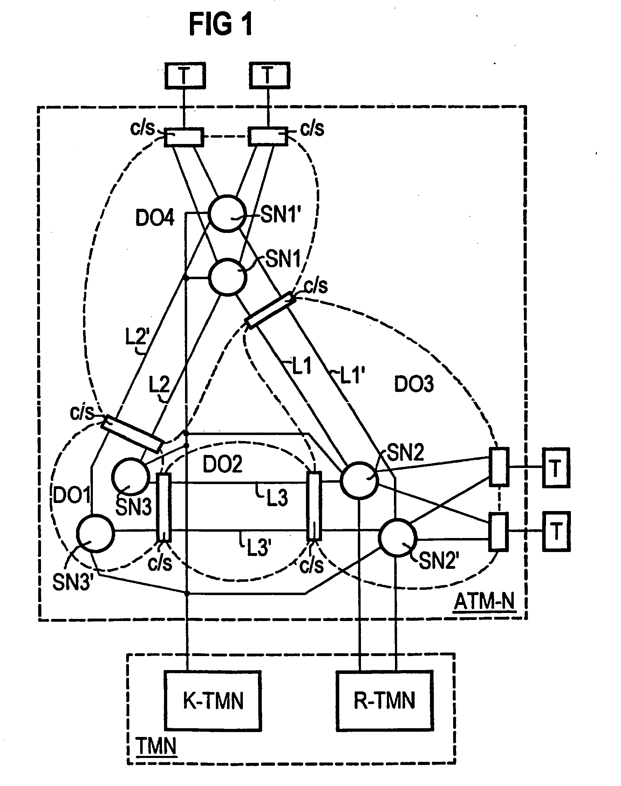

In FIG 1 ist ausschnittweise ein Kommunikationsnetz ATM-N dargestellt, welches bei dem vorliegenden Ausführungsbeispiel für die Übertragung von Nachrichtenzellen nach einem asynchronen Transfer-Modus ("Asynchronous Transfer Mode") ausgelegt ist. Nach diesem Transfer-Modus werden in bekannter Weise Nachrichtenzellen fester Länge im Zuge von virtuellen Verbindungen übertragen. Die Nachrichtenzellen weisen dabei jeweils einen Zellenkopf ("Header") sowie einen Informationsteil auf. In dem jeweiligen Zellenkopf sind dabei u.a. Angaben bezüglich der jeweiligen virtuellen Verbindung geführt. Der Informationsteil dient dagegen für die Übertragung der eigentlichen Nutzinformationen. Nutzinformationen können dabei beliebige digitale Signale sein, unter welche beispielsweise Datensignale, digitale Sprachinformationen oder digitale Videosignale fallen.

Das Kommunikationsnetz ATM-N weist eine Mehrzahl von miteinander verbundenen Knoten auf, von denen in FIG 1 lediglich drei mit SN1, SN2 und SN3 bezeichnete Knoten angegeben sind. Die Knoten SN1 und SN2 mögen dabei als Ursprungs-und Zielknoten dienen, an welche jeweils über Teilnehmer-Verbindungsleitungen Teilnehmereinrichtungen T angeschlossen sind.

Stellvertretend für eine Vielzahl von zwischen den Knoten verlaufenden Verbindungsleitungen sind eine die Knoten SN1 und SN2 verbindende Knoten-Verbindungsleitung L1, eine die Knoten SN1 und SN3 verbindende Knoten-Verbindungsleitung L2 sowie eine die Knoten SN2 und SN3 verbindende Knoten-Verbindungsleitung L3 dargestellt. Innerhalb dieses Kommunikationsnetzes werden in gleicher Richtung verlaufende virtuelle Verbindungen geführt. Zur Kennzeichnung einer solchen virtuellen Verbindung ist in dem Zellenkopf der übertragenen Nachrichtenzellen jeweils eine entsprechende Verbindungsinformation geführt. Die genannten Knoten mögen dabei als sogenannte "Cross Connects" oder Multiplexer ausgebildet sein, über welche virtuelle Pfade fest eingerichtet werden und gegebenenfalls über längere Zeit bestehen bleiben. Die Steuerung dieser Knoten kann dafür über ein in FIG 1 angedeutetes, dem Kommunikationsnetz ATM-N überlagertes Knoten-Management-Netzwerk K-TMN erfolgen. Die Knoten können jedoch auch aus Vermittlungseinrichtungen bestehen, über welche virtuelle Verbindung bzw. Pfade im Zuge eines entsprechenden Verbindungsaufbaus wahlweise eingerichtet werden können.

Da ein virtueller Pfad beispielsweise bis zu 65.536 virtuelle Verbindungen enthalten und außerdem eine hohe Summenbitrate von beispielsweise bis zu 2,4 GByte/s aufweisen kann, ist es zweckmäßig, jedem virtuellen Pfad einen Ersatzpfad auf einem Ersatzweg zuzuordnen, um im Bedarfsfalle ohne Verlust von Nachrichtenzellen von einem virtuellen Pfad auf den zugeordneten Ersatzpfad umschalten zu können. Das heißt, daß in dem Kommunikationsnetz ATM-N eine Redundanz vorzusehen ist.

Nach FIG 1 wird die Redundanz bei dem vorliegenden Ausführungsbeispiel dadurch erreicht, daß jedem der Knoten SN1, SN2 und SN3 ein logisch-identischer Knoten als Redundanz.zugeordnet ist. Die redundanten Knoten sind entsprechend ihrer Zuordnung mit SN1', SN2' und SN3' bezeichnet. Die Knoten SN1' und SN2' sind dabei wie die diesen zugeordneten Knoten SN1 und SN2 als Ursprungs-und Zielknoten mit zu Teilnehmereinrichtungen T hinführenden Teilnehmer-Verbindungsleitungen ausgebildet. Damit sind jeder Teilnehmereinrichtung zwei redundante Teilnehmer-Verbindungsleitungen zugeordnet.

Darüber hinaus ist jeder der Knoten-Verbindungsleitungen L1, L2 und L3 eine redundante Knoten-Verbindungsleitung zugeordnet. Die zu der Knoten-Verbindungsleitung L1 redundante, zwischen den Knoten SN1' und SN2' verlaufende Knoten-Verbindungsleitung ist mit L1', die zu der Knoten-Verbindungsleitung L2 redundante, zwischen den Knoten SN1' und SN3' verlaufende Knoten-Verbindungsleitung mit L2' und die zu der Knoten-Verbindungsleitung L3 redundante, zwischen den Knoten SN2' und SN3' verlaufende Knoten-Verbindungsleitung mit L3' bezeichnet.

Die jeweils ein Leitungspaar darstellenden, redundanten Knoten-Verbindungsleitungen sind über zumindest ein Combiner-Splitter-Element C/S miteinander verknüpft. Als Beispiel weist das aus den Knoten-Verbindungsleitungen L3 und L3' gebildete Leitungspaar zwei derartige Combiner-Splitter-Elemente C/S auf. Die übrigen aus Knoten-Verbindungsleitungen gebildeten Leitungspaare mögen dagegen lediglich jeweils über ein Combiner-Splitter-Element verfügen.

Darüber hinaus sind die jeweils ein Leitungspaar bildenden, redundanten Teilnehmer-Verbindungsleitungen über ein Combiner-Splitter-Element C/S miteinander verknüpft. Dieses bildet zugleich die Schnittstelle zu einer mit einer Teilnehmereinrichtung verbundenen Einzel-Teilnehmerleitung.

In dem Kommunikationsnetz ATM-N sind Redundanz-Domänen festgelegt, die jeweils durch Combiner-Splitter-Elemente begrenzt sind. Vier derartige Redundanz-Domänen sind in FIG 1 mit DO1 bis DO4 bezeichnet. Dabei kann eine solche Redundanz-Domäne redundante Knoten und redundante Leitungspaare (Domänen DO 3 und DO4), lediglich redundante Knoten (Domäne DO1) oder lediglich einen Teilabschnitt eines redundanten Leitungspaares (Domäne DO2) umfassen. Letzteres ergibt sich beispielsweise aus den zwei Combiner-Splitter-Elementen C/S, welche in das aus den redundanten Knoten-Verbindungsleitungen L3 und L3' gebildete Leitungspaar eingefügt sind.

In dem in FIG 1 dargestellten Kommunikationsnetz ATM-N werden die im Zuge von virtuellen Verbindungen von den Teilnehmereinrichtungen T abgegebenen Nachrichtenzellen über die redundanten Knoten redundant übertragen. Dabei ist es, wie im folgenden noch erläutert wird, u.a. Aufgabe der mit Knoten-Verbindungsleitungen verbundenen Combiner-Splitter-Elemente, anhand der über die beiden zugehörigen Knoten-Verbindungsleitungen zugeführten Nachrichtenzellenströme einen aktiven Weg auszuwählen und lediglich den über diesen zugeführten Nachrichtenzellenstrom über die beiden redundanten Knoten-Verbindungsleitungen weiterzuleiten. Im Normalfall wird von den beiden Knoten-Verbindungsleitungen diejenige als aktiver Weg ausgewählt, auf welcher der zugeführte Nachrichtenzellenstrom gegenüber dem auf der verbleibenden Knoten-Verbindungsleitung zugeführten Nachrichtenzellenstrom voreilend auftritt. Die mit den Knoten-Verbindungsleitungen verbundenen Combiner-Splitter-Elemente sind bei dem vorliegenden Ausführungsbeispiel bidirektional ausgebildet.

In entsprechender Weise ist es u.a. Aufgabe der mit Teilnehmer-Verbindungsleitungen verbundenen, ebenfalls bidirektional ausgebildeten Combiner-Splitter-Elemente von den über die beiden zugehörigen redundanten Knoten zugeführten Nachrichtenzellenströmen lediglich einen auszuwählen und diesen an die in Frage kommende Teilnehmereinrichtung T weiterzuleiten. Ein von einer solchen Teilnehmereinrichtung abgegebener Nachrichtenzellenstrom wird dagegen mit Hilfe des zugeordneten Combiner-Splitter-Elementes redundant über die damit verbundenen Teilnehmer-Verbindungsleitungen weitergeleitet.

Die genannten Combiner-Splitter-Elemente C/S sind bei dem vorliegenden Ausführungsbeispiel in ein dem Kommunikationsnetz ATM-N überlagertes Redundanz-Management-Netzwerk R-TMN eingebunden, um einer diesem zugehörigen zentralen Einrichtung die Redundanz betreffende Informationen zuzuführen. Auf diese Informationen wird im folgenden noch näher eingegangen. Dieses Redundanz-Management-Netzwerk kann dabei neben dem zuvor erwähnten Knoten-Management-Netzwerk K-TMN als unabhängiges Element in einem Telekommunikations-Management-Netzwerk TMN integriert sein.

Bei dem vorliegenden Ausführungsbeispiel ist das Redundanz-Management-Netzwerk R-TMN innerhalb des Kommunikationsnetzes ATM-N realisiert, indem die genannte zentrale Einrichtung an eines der redundanten Knotenpaare angeschlossen und über festgelegte virtuelle Verbindungen mit den einzelnen Combiner-Splitter-Elementen in Verbindung steht. Alternativ dazu kann die Verbindung zu den einzelnen Combiner-Splitter-Elementen auch über gesonderte physikalische Leitungen bestehen, d.h. daß das Redundanz-Management-Netzwerk unabhängig von dem Kommunikationsnetz ATM-N realisiert ist.

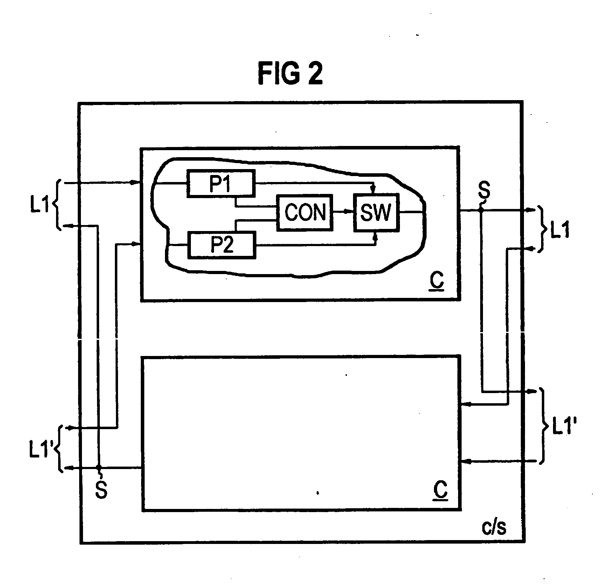

Im folgenden wird nun anhand der FIG 2 auf die Wirkungsweise und auf einen möglichen Aufbau der zuvor genannten Combiner-Splitter-Elemente C/S am Beispiel des die Knoten-Verbindungsleitungen L1 und L1' verknüpfenden Combiner-Splitter-Elementes näher eingegangen. Dabei sind in dieser FIG lediglich die für das Verständnis der vorliegenden Erfindung erforderlichen Schaltungselemente wiedergegeben.

Nach FIG 2 weist das bidirektional ausgelegte Combiner-Splitter-Element C/S zwei den beiden Übertragungsrichtungen zugeordnete Verknüpfungseinrichtungen ("Combiner") C auf. Jedes dieser Verknüpfungselemente verfügt eingangsseitig über zwei Pufferspeicher P1 und P2, wobei dem Pufferspeicher P1 der auf der Knoten-Verbindungsleitung L1 auftretende, dem Pufferspeicher P2 dagegen der auf der Knoten-Verbindungsleitung L1' auftretende Nachrichtenzellenstrom zugeführt ist. Diese Pufferspeicher stehen mit einer Steuereinrichtung CON in Verbindung, welche anhand der in die Pufferspeicher aufgenommene Nachrichtenzellen überprüft, welcher der beiden zugeführten Nachrichtenzellenströme der voreilende ist. Dieser voreilende Nachrichtenzellenstrom wird dann über eine von der Steuereinrichtung CON gesteuerte Schalteinrichtung SW und einen Verteilpunkt ("Splitter") S gleichzeitig an die weiterführenden Knoten-Verbindungsleitungen L1 und L1' weitergeleitet.

Für die genannte Überprüfung vergleicht die Steuereinrichtung CON bei dem vorliegenden Ausführungsbeispiel anhand der Zellenköpfe und der übrigen Informationsinhalte der in die Pufferspeicher P1 und P2 aufgenommenen Nachrichtenzellen, ob die auf den beiden Knoten-Verbindungsleitungen L1 und L1' auftretenden Nachrichtenzellen korrelieren, d.h. es wird ein Zellenvergleich auf Identität durchgeführt. Dabei ist durch eine entsprechende Puffergröße eine Korrelationslänge festgelegt, welche die durch die unterschiedlichen Wege bedingte Laufzeitdifferenz berücksichtigt. Eine maximale Laufzeitdifferenz von 0,1 ms würde z.B. bei einer Bitrate von 155 Mbit/s und einer Nachrichtenzellenlänge von 53 Oktetts, wie sie für ATM-Zellen festgelegt ist, eine Puffergröße und damit eine Korrelationslänge von 37 Nachrichtenzellen erfordern.

Der gerade erläuterte zellenweise Vergleich wird durch die Steuereinrichtung CON fortlaufend durchgeführt, um zu überprüfen, welcher der beiden zugeführten Nachrichtenzellenströme der voreilende ist, und um den gerade voreilenden Nachrichtenzellenstrom in der beschriebenen Weise weiterzuleiten. Bei Laufzeitveränderungen, die ein Nacheilen des bisher ausgewählten Nachrichtenzellenstromes nach sich ziehen, wird auf die andere Knoten-Verbindungsleitung umgeschaltet. Durch den zellenweisen Vergleich kann dabei die Umschaltung verlustfrei erfolgen.

Der zellenweise Vergleich und die damit zusammenhängenden, gerade erläuterten Steuerungsvorgänge werden durch die Steuereinrichtung CON selbsttätig durchgeführt. Lediglich wenn keine Korrelation zwischen den Nachrichtenzellen auftritt bzw. bei Ausfall des Nachrichtenzellenstromes auf der bisher als aktiven Weg ausgewählten Knoten-Verbindungsleitung und einer damit verbundenen Umschaltung auf die verbleibende Knoten-Verbindungsleitung wird durch die Steuereinrichtung CON ein festgelegtes Meldesignal generiert. Dieses wird bei dem vorliegenden Ausführungsbeispiel in eine Nachrichtenzelle eingefügt, welche im Zuge der oben erwähnten, für das Redundanz-Management-Netzwerk R-TMN innerhalb des Kommunikationsnetzes ATM-N festgelegten virtuellen Verbindung zu der oben erwähnten zentralen Einrichtung des Redundanz-Management-Netzwerkes hin übertragen wird. Außerdem wird durch die Steuereinrichtung CON aus der Folge der den einzelnen virtuellen Verbindungen zugehörigen Nachrichtenzellen die Zellenrate ermittelt und diese durch ein festgelegtes Meldesignal der zentralen Einrichtung des Redundanz-Management-Netzwerkes angezeigt.

Im übrigen ist in der Steuereinrichtung CON eine Tabelle bezüglich der über die zugehörigen Knoten-Verbindungsleitungen verlaufenden virtuellen Verbindungen geführt. Dabei wird ein zuvor beschriebener zellenweiser Vergleich für eine Nachrichtenzelle lediglich dann durchgeführt, wenn die durch die Verbindungsangaben im Zellenkopf der betreffenden Nachrichtenzelle bezeichnete virtuelle Verbindung bereits in der Tabelle festgehalten ist. Anderenfalls wird die betreffende Nachrichtenzelle ohne Vergleich weitergeleitet und Angaben bezüglich der zugehörigen, bisher nicht registrierten virtuellen Verbindung in die Tabelle aufgenommen. Zusätzlich wird der zentralen Einrichtung des Redundanz-Management-Netzwerkes R-TMN das Auftreten einer neuen virtuellen Verbindung durch ein entsprechendes Meldesignal angezeigt.

Die vorstehend erläuterten Steuerungsvorgänge wiederholen sich in sämtlichen, Knoten-Verbindungsleitungen zugeordneten Combiner-Splitter-Elementen C/S. Darüber hinaus laufen entsprechende Steuerungsvorgänge auch in den Teilnehmer-Verbindungsleitungen zugeordneten Combiner-Splitter-Elementen ab. Ein Unterschied besteht lediglich darin, daß einerseits ein von der jeweiligen Steuereinrichtung CON ausgewählter Nachrichtenzellenstrom der in Frage kommenden Teilnehmereinrichtung T über eine Einzel-Teilnehmerleitung zugeführt wird und andererseits ein dem jeweiligen Combiner-Splitter-Element von der zugehörigen Teilnehmereinrichtung her zugeführter Nachrichtenzellenstrom ohne eine oben beschriebene Auswertung an die redundanten Teilnehmer-Verbindungsleitungen abgegeben wird.

Das Redundanz-Management-Netzwerk R-TMN dient bei dem vorliegenden Ausführungsbeispiel als übergeordnetes Management-System, welches anhand der von den Combiner-Splitter-Elementen C/S gelieferten Meldesignale Anweisungen für andere Management-Systeme des Telekommunikations-Management-Netzwerkes TMN, beispielsweise für das Knoten-Management-Netzwerk K-TMN, formuliert. Derartige Anweisungen für das Knoten-Management-Netzwerk können beispielsweise darin bestehen, daß dieses angewiesen wird, eine Wegeänderung für virtuelle Verbindungen durchzuführen, wenn die Redundanz für diese virtuellen Verbindungen über den bisherigen Weg nicht mehr gegeben ist. Darüber hinaus können durch die zentrale Einrichtung des Redundanz-Management-Netzwerkes anhand der von den einzelnen Combiner-Splitter-Elementen C/S gelieferten Meldesignale Protokolle bezüglich der Qualität einzelner virtueller Verbindungen erstellt werden, die den Teilnehmern des Kommunikationsnetzes ATM-N (FIG 1) zur Verfügung gestellt werden können. Ein solches Protokoll kann dabei beispielsweise Angaben über die Redundanz sowie die Fehlerrate für die jeweilige virtuelle Verbindung enthalten.

Bezüglich der zuvor beschriebenen Combiner-Splitter-Elemente C/S sei noch darauf hingewiesen, daß diese jeweils innerhalb des Kommunikationsnetzes ATM-N als abgesetzte Einheit oder als Bestandteil einer der redundanten Knoten ausgebildet sein können. Außerdem sei noch darauf hingewiesen, daß vorstehend die vorliegende Erfindung zwar am Beispiel eines nach einem asynchronen Transfer-Modus arbeitenden Kommunikationsnetzes beschrieben worden ist, diese jedoch auch in von diesem Transfer-Modus abweichenden Kommunikationsnetzen, beispielsweise in Paketvermittlungsnetzen, anwendbar ist.

## Patentansprüche

1. Kommunikationsnetz (ATM-N) für die Übertragung von Nachrichtensignalen mit einer Mehrzahl von miteinander verbundenen Knoten (SN1, SN2, SN3),
**dadurch gekennzeichnet,**
**daß** eine Knoten-/Maschenredundanz innerhalb des Kommunikationsnetzes derart ausgebildet ist,daß jedem Knoten ein logisch identischer Knoten (SN1', SN2', SN3') zugeordnet wird,
**daß** jede Verbindungsleitung (L1, L2, L3) zwischen diesen Knoten durch eine redundante, gegebenenfalls über einen anderen physikalischen Pfad geführte Verbindungsleitung (L1',L2',L3') ergänzt wird,
**daß** die jeweilige Verbindungsleitung und die jeweils dazu redundante Verbindungsleitung zwischen zwei Knoten durch zumindest ein Combiner-Splitter-Element (C/S), welches gegebenenfalls separat vom Knoten ausgebildet sein kann, verknüpft werden.

2. Kommunikationsnetz nach Anspruch 1,
**dadurch gekennzeichnet,**
**daß** das jeweilige Combiner Splitter Element bidirektional ausgebildet sind.

3. Kommunikationsnetz nach Anspruch 1 oder 2,
**dadurch gekennzeichnet,**
**daß** das jeweilige Combiner-Splitter Element einen Speicher aufweisen, der derart groß dimensioniert ist, daß er die größte mögliche Laufzeitdifferenz zwischen den beiden physikalischen Pfaden einschließlich der Knoten auszugleichen gestattet.

4. Kommunikationsnetz nach Anspruch 1 bis 3,
**dadurch gekennzeichnet,**
**daß** sämtliche Combiner-Splitter-Elemente (C/S) in ein dem Kommunikationsnetz (ATM-N) überlagertes, gegebenenfalls als unabhängiges System in einem Telekommunikations-Management-Netzwerk (TMN) integriertes Redundanz-Management-Netzwerk (R-TMN) eingebunden sind.

5. Kommunikationsnetz nach Anspruch 1 bis 4,
**dadurch gekennzeichnet,**
**daß** die Combiner-Splitter-Elemente (C/S) über festgelegte virtuelle Verbindungen des Kommunikationsnetzes (ATM-N) mit einer zentralen Einrichtung des Redundanz-Management-Netzwerkes (TMN) verbunden sind.

6. Kommunikationsnetz nach einem der vorstehenden Ansprüche,
**dadurch gekennzeichnet,**
**daß** die Combiner-Splitter-Elemente (C/S) jeweils über eine gesonderte physikalische Leitung mit einer zentralen Einrichtung des Redundanz-Management-Netzwerkes (TMN)verbunden sind.

7. Kommunikationsnetz nach einem der vorstehenden Ansprüche,
**dadurch gekennzeichnet,**
**daß** innerhalb des Kommunikationsnetzes (ATM-N) Redundanz-Domänen (DO1, ...,DO4) festgelegt sind, welche jeweils durch die Combiner-Splitter-Elemente (C/S) begrenzt sind.

8. Kommunikationsnetz nach einem der vorstehenden Ansprüche,
**dadurch gekennzeichnet,**
**daß** die Combiner-Splitter-Elemente (C/S) derart ausgebildet sind, daß durch diese jeweils aktiv der Redundanz-Betrieb gesteuert und lediglich bei Störungen in diesem Redundanzbetrieb der zentralen Einrichtung des Redundanz-Management-Netzwerkes (R-TMN) ein entsprechendes Meldesignal für eine Auswertung zugeführt wird.

9. Kommunikationsnetz nach einem der vorstehenden Ansprüche,
**dadurch gekennzeichnet,**
**daß** die Combiner-Splitter-Elemente (C/S) weiter derart ausgebildet sind, daß durch diese verbindungsindividuell die Bits für die jeweilige virtuelle Verbindung erfaßt und Angaben bezüglich der jeweiligen Bitrate der zentralen Einrichtung des Redundanz-Management-Netzwerkes (R-TMN) zugeführt sind.

10. Kommunikationsnetz nach einem der vorstehenden Ansprüche,
**dadurch gekennzeichnet,**
**daß** die zentrale Einrichtung des Redundanz-Management-Netzwerkes (R-TMN) derart ausgebildet ist, daß durch diese nach Maßgabe der von den Combiner-Splitter-Elementen (C/S) jeweils zugeführten Meldesignale und gegebenenfalls der Bitratenangaben Protokolle bezüglich der Qualität der einzelnen virtuellen Verbindungen erstellt werden.

## Claims

1. Communication network (ATM-N) for transmitting information signals with a plurality of interconnected nodes (SN1, SN2, SN3), **characterized in that** a node/mesh redundancy is formed within the communication network in such a manner that a logically identical node (SN1', SN2', SN3') is allocated to each node,
that each connecting line (L1, L2, L3) between these nodes is supplemented by a redundant connecting line (L1', L2', L3') conducted via another physical path, if necessary,
and that the respective connecting line and the connecting line in each case redundant thereto between two nodes are combined by at least one combiner-splitter element (C/S), which, if necessary, can be arranged separately of the node.

2. Communication network according to Claim 1, **characterized in that** the respective combiner-splitter elements are constructed to be bidirectional.

3. Communication network according to Claim 1 or 2, **characterized in that** the respective combiner-splitter elements have a store which is dimensioned to be of such size that it allows the greatest possible delay time difference between the two physical paths including the nodes to be compensated for.

4. Communication network according to Claim 1 to 3, **characterized in that** all combiner-splitter elements (C/S) are tied into a redundancy management network (R-TMN) superimposed on the communication network (ATM-N), possibly integrated as independent system in a telecommunication management network (TMN).

5. Communication network according to Claim 1 to 4, **characterized in that** the combiner-splitter elements (C/S) are connected to a central device of the redundancy management network (TMN) via established virtual connections of the communication network (ATM-N).

6. Communication network according to one of the preceding claims, **characterized in that** the combiner-splitter elements (C/S) are in each case connected to a central device of the redundancy management network (TMN) via a separate physical line.

7. Communication network according to one of the preceding claims, **characterized in that** within the communication network (ATM-N), redundancy domains (DO1 ...,DO4) are established which are in each case bounded by the combiner-splitter elements (C/S).

8. Communication network according to one of the preceding claims, **characterized in that** the combiner-splitter elements (C/S) are constructed in such a manner that they in each case actively control the redundancy operation and supply only in the case of disturbances in this redundancy operation a corresponding status signal for an evaluation to the central device of the redundancy management network (R-TMN).

9. Communication network according to one of the preceding claims, **characterized in that** the combiner-splitter elements (C/S) are also constructed in such a manner that they connection-individually detect the bits for the respective virtual connection and supply information with respect to the respective bit rate to the central device of the redundancy management network (R-TMN).

10. Communication network according to one of the preceding claims, **characterized in that** the central device of the redundancy management network (R-TMN) is constructed in such a manner that it generates protocols with respect to the quality of the individual virtual connections as determined by the status signals in each case supplied by the comber-splitter elements (C/S) and possibly the bit rate information.

## Revendications

1. Réseau de communication (ATM-N) pour la transmission de signaux de messages comprenant une pluralité de noeuds (SN1, SN2, SN3) reliés entre eux,
**caractérisé en ce que**
une redondance de noeud/maille est réalisée à l'intérieur du réseau de communication de telle sorte qu'un noeud (SN1', SN2', SN3') logiquement identique est attribué à chaque noeud,
**en ce que** chaque ligne de liaison (L1, L2, L3) entre ces noeuds est complétée par une ligne de liaison (L1', L2', L3') redondante et guidée le cas échéant au moyen d'un autre chemin physique,
**en ce que** la ligne de liaison respective et la ligne de liaison redondante par rapport à la première sont associées entre deux noeuds par au moins un élément combiner-splitter (C/S), qui peut être conçu également séparément du noeud.

2. Réseau de communication selon la revendication 1,
**caractérisé en ce que**
l'élément combiner-splitter concerné est réalisé de façon bidirectionnelle.

3. Réseau de communication selon la revendication 1 ou 2,
**caractérisé en ce que**
l'élément combiner-splitter respectif présente une mémoire qui est dimensionnée suffisamment grande pour qu'elle permette de compenser la différence de temps de parcours maximale possible entre les deux chemins physiques, y compris les noeuds.

4. Réseau de communication selon les revendications 1 à 3,
**caractérisé en ce que**
tous les éléments combiner-splitter (C/S) sont intégrés dans un réseau de gestion de redondance (R-TMN) superposé au réseau de télécommunication (ATM-N) et intégré le cas échéant en tant que système indépendant dans un réseau de gestion de télécommunication (TMN).

5. Réseau de communication selon les revendications 1 à 4,
**caractérisé en ce que**
les éléments combiner-splitter (C/S) sont reliés par des liaisons virtuelles définies du réseau de communication (ATM-N) à un dispositif central du réseau de gestion de redondance (TMN).

6. Réseau de communication selon l'une quelconque des revendications précédentes,
**caractérisé en ce que**
les éléments combiner-splitter (C/S) sont reliés chacun au moyen d'une ligne physique séparée à un dispositif central du réseau de gestion de redondance (TMN).

7. Réseau de communication selon l'une quelconque des revendications précédentes,
**caractérisé en ce que**
des domaines de redondance (DO1, ..., D04), qui sont limités chacun par les éléments combiner-splitter (C/S), sont définis à l'intérieur du réseau de communication (ATM-N).

8. Réseau de communication selon l'une quelconque des revendications précédentes,
**caractérisé en ce que**
les éléments combiner-splitter (C/S) sont reliés de telle sorte qu'à chaque fois le mode de redondance est commandé de façon active par ces éléments et un signal d'avertissement approprié pour une analyse et est amené uniquement en cas de perturbations dans ce mode de redondance au dispositif central du réseau de gestion de redondance (R-TMN).

9. Réseau de communication selon l'une quelconque des revendications précédentes,
**caractérisé en ce que**
les éléments combiner-splitter (C/S) sont réalisés également de telle sorte que les bits pour la liaison virtuelle respective sont enregistrés de façon individuelle par liaison par ces éléments et des indications concernant le débit binaire respectif sont amenées au dispositif central du réseau de gestion de redondance (R-TMN).

10. Réseau de communication selon l'une quelconque des revendications précédentes,
**caractérisé en ce que**
le dispositif central du réseau de gestion de redondance (R-TMN) est réalisé de telle sorte que les protocoles concernant la qualité des liaisons virtuelles individuelles sont établis par ce dispositif en fonction des signaux d'avertissement amenés par chacun des éléments combiner-splitter (C/S) et le cas échéant des indications de débit binaire.
